# EUROPÄISCHE PATENTSCHRIFT

(11) **EP 3 628 612 B1**
(45) Veröffentlichungstag und Bekanntmachung des Hinweises auf die Patenterteilung: **28.06.2023**
(21) Anmeldenummer: 19199573.7
(22) Anmeldetag: 25.09.2019
(51) Int. Cl.: B65G 67/20, B65G 13/075

(54) **LADEEINRICHTUNG ZUM HECKSEITIGEN BELADEN EINES LKWS**
LOADING DEVICE FOR THE REAR LOADING OF A LORRY
DISPOSITIF DE CHARGEMENT DESTINÉS AU CHARGEMENT À L'ARRIÈRE D'UN POIDS LOURD

(30) Priorität: 26.09.2018 DE 102018123739
(43) Veröffentlichungstag der Anmeldung: 01.04.2020
(73) Patentinhaber: Schumacher Packaging GmbH, 96237 Ebersdorf b. Coburg (DE)
(72) Erfinder: EINWICH, Raimund, 96279 Weidhausen (DE)
(74) Vertreter: Dr. Gassner & Partner mbB

(56) Entgegenhaltungen:
- EP-A1- 0 111 887
- GB-A- 870 493
- GB-A- 2 056 934
- US-A- 3 857 501
- US-A- 3 952 887
- US-A- 4 181 460
- US-A1- 2007 201 971
- US-B1- 7 695 235

## Beschreibung

Die Erfindung betrifft eine Ladeeinrichtung zum heckseitigen Beladen eines LKWs.

Die DE 33 16 419 A1 offenbart ein LKW-Beladegerät für die heckseitige Beladung. Dabei wird eine Palettenladung durch einen dreigabelpaarigen Hubwagen von einem beweglichen Rollenvortisch entnommen und mittels einer auf Teleskopschienen beweglichen Plattform zu einer LKW-Ladefläche transportiert.

Die DE 20 2009 018 844 offenbart ein industrielles Transportfahrzeug mit einer Zugmaschine und wenigstens einem Anhänger. Ein Ladebereich des Anhängers weist antreibbare Rollen auf, mit denen Ladegut quer zur Längsrichtung des Anhängers verschiebbar ist.

Aus der EP 0 930 258 A1 ist eine Vorrichtung zum seitwärts Be- und Entladen von Paletten auf/von Lastwagen bekannt. Dabei werden die Paletten mittels eines Förderbands paarweise zu einer Verschiebeeinrichtung gefördert, mit welcher sie aufgenommen und seitwärts der Ladefläche eines Lastwagens zugeführt oder davon entnommen werden.

Die EP 2 778 010 A2 offenbart einen Container, an dessen Unterseite eine Vielzahl von Rollen vorgesehen sind, wobei die Rollen für eine quer zur Längsrichtung des Containers ausgerichtete Verladebewegung ausgebildet sind.

Die US 3 952 887 A offenbart eine Ladeeinrichtung zum heckseitigen Beladen eines LKWs, umfassend einen verfahrbaren Rollenteppich, welcher einen Zwischenladeboden zum Abstellen von Gütern bildet, eine Güter-Rückhaltevorrichtung mit Güter-Rückhaltemitteln, wobei die Güter-Rückhaltemittel wahlweise von einer Öffnungsposition in eine Schließposition bewegbar sind, wobei die Güter-Rückhaltemittel so ausgebildet sind, dass in der Öffnungsposition der Rollenteppich mit den darauf aufgenommenen Gütern durch die Güter-Rückhaltevorrichtung hindurch verfahrbar ist, und dass in der Schließposition die Güter-Rückhaltemittel den Rollenteppich abschnittsweise so überdecken, dass die Güter beim Zurückziehen des Rollenteppichs aus der Güter-Rückhaltevorrichtung relativ zum Zwischenladeboden verschoben werden, wobei der Rollenteppich aus einer Vielzahl von miteinander verbundenen Rollenmodulen gebildet ist, wobei der Rollenteppich wegen seiner aus einer Vielzahl von Rollenmodulen gebildeten Bauweise in vertikaler Richtung flexibel ist, und wobei der Rollenteppich an seinen Längsseiten mit Gleitelementen versehen ist.

Die nach dem Stand der Technik bekannten Vorrichtungen zum seitlichen Be- und Entladen eines LKWs erfordern eine breite Laderampe. Aus Platzgründen sind in der Praxis Logistikunternehmen üblicherweise so organisiert, dass LKWs zum Be- und Entladen heckseitig an Laderampen anzudocken haben.

Nach dem Stand der Technik sind LKWs bekannt, deren Ladeplattform mit Rollen zum Verschieben von Gütern ausgestattet sind. Sofern auch im Bereich der Laderampe ein Rollenteppich vorgesehen ist, können damit Güter schnell und einfach mittels Verschieben Be- und Entladen werden.

Die Mehrzahl an LKWs ist allerdings nicht mit Ladeböden ausgestattet, an denen Rollen zum Verschieben von Gütern vorgesehen sind. Das heckseitige Be- und Entladen solcher LKWs erfolgt meist mit Gabelstaplern oder Hubwagen. Das ist zeit- und kostenaufwändig.

Aufgabe der Erfindung ist es, die Nachteile nach dem Stand der Technik zu beseitigen. Es soll insbesondere eine Ladeeinrichtung angegeben werden, welche ein vereinfachtes und schnelleres heckseitiges Be- und Entladen eines LKWs ermöglicht.

Diese Aufgabe wird durch die Merkmale des Anspruchs 1 gelöst. Zweckmäßige Ausgestaltungen der Erfindung ergeben sich aus den abhängigen Patentansprüchen.

Nach Maßgabe der Erfindung wird eine Ladeeinrichtung zum heckseitigen Beladen eines LKWs vorgeschlagen, umfassend einen verfahrbaren Rollenteppich, welcher einen Zwischenladeboden zum Abstellen von Gütern bildet,
eine Güter-Rückhaltevorrichtung mit Güter-Rückhaltemitteln,
wobei die Güter-Rückhaltemittel wahlweise von einer Öffnungsposition in eine Schließposition bewegbar sind,
wobei die Güter-Rückhaltemittel so ausgebildet sind, dass (i) in der Öffnungsposition der Rollenteppich mit den darauf aufgenommenen Gütern durch die Güter-Rückhaltevorrichtung hindurch verfahrbar ist, und dass (ii) in der Schließposition die Güter-Rückhaltemittel den Rollenteppich abschnittsweise so überdecken, dass die Güter beim Zurückziehen des Rollenteppichs aus der Güter-Rückhaltevorrichtung relativ zum Zwischenladeboden verschoben werden,
wobei der Rollenteppich aus einer Vielzahl von miteinander verbundenen Rollenmodulen gebildet ist,
wobei der Rollenteppich wegen seiner aus einer Vielzahl von Rollenmodulen gebildeten Bauweise in einer Richtung quer zu seiner Längserstreckungsrichtung und in vertikaler Richtung flexibel ist, und
wobei der Rollenteppich an seinen Längsseiten mit Seitenführungsrollen und/oder Gleitelementen versehen ist.

Im Sinne der Erfindung werden unter dem Begriff "Güter" insbesondere Stückgüter verstanden, welche mittels eines Gabelstaplers transportierbar sind. Es kann sich dabei insbesondere um Güter handeln, welche auf Paletten aufgenommen sind. Der Begriff "Rollenteppich" ist allgemein zu verstehen in dem Sinn, dass er aus Rollen und/oder Walzen gebildet sein kann.

Mittels der geschlossenen Güter-Rückhaltevorrichtung werden die Güter insbesondere in einem Abschnitt gehalten, welcher sich unmittelbar oberhalb des Zwischenladebodens befindet. Der Abschnitt ist vorteilhafterweise so bemessen, dass mittels der geschlossenen Güter-Rückhaltevorrichtung im Wesentlichen nur eine Bewegung von auf dem Zwischenladeboden aufgenommenen Paletten relativ zu einer Bewegung des Rollenteppichs blockiert wird. D. h. die Güter-Rückhaltevorrichtung greift im geschlossenen Zustand im Wesentlichen an den Paletten, nicht jedoch an den darauf aufgenommenen Gütern an. Damit werden eventuelle Beschädigungen, insbesondere von auf den Paletten aufgenommenen empfindlichen Gütern, vermieden.

Nach einer vorteilhaften Ausgestaltung umfasst die Ladeeinrichtung eine Verschiebevorrichtung, mit welcher die auf dem Rollenteppich abgestellten Güter in Überdeckung mit dem Zwischenladeboden verschoben werden. In der Praxis kann es insbesondere beim Beladen des Rollenteppichs mittels eines Gabelstaplers dazu kommen, dass Paletten seitlich über den Zwischenladeboden überstehen. Der Zwischenladeboden weist zweckmäßigerweise eine Breite auf, welche zu einer weiteren Breite des Ladebodens eines LKWs korrespondiert. Die weitere Breite eines Ladebodens eines LKWs beträgt üblicherweise 235 bis 255 cm. Mittels der vorgeschlagenen Verschiebevorrichtung kann sichergestellt werden, dass sämtliche Güter in Überdeckung mit dem Zwischenladeboden sind. Es können Komplikationen beim Verschieben des Rollenteppichs auf den Ladeboden des LKWs vermieden werden.

Die Güter können mittels der Verschiebeeinrichtung vorteilhafterweise in einer Richtung quer zu einer Längserstreckungsrichtung des Rollenteppichs verschoben werden. Zu diesem Zweck kann der Rollenteppich zweckmäßigerweise vor dem Verfahren durch die Güter-Rückhaltevorrichtung in die Verschiebevorrichtung verfahren werden. Damit ist auch sichergestellt, dass der Rollenteppich komplikationsfrei durch die Güter-Rückhaltevorrichtung hindurch in Richtung des Ladebodens des LKWs verfahren werden kann.

Nach einer weiteren vorteilhaften Ausgestaltung wird zumindest ein Teil der Rollen des Rollenteppichs mittels einer Feststellvorrichtung festgestellt, so dass zumindest ein Teil der auf dem Zwischenladeboden aufgenommenen Güter relativ zum Rollenteppich fest steht. Die Feststellvorrichtung ermöglicht ein wahlweises Festsetzen vorgegebener Rollen. Indem Rollen nach dem Beladen festgestellt bzw. in ihrer Drehbewegung blockiert werden, kann ein unerwünschtes Verschieben der Güter auf dem Rollenteppich vermieden werden.

Der Rollenteppich weist vorteilhafterweise in Draufsicht einen rechteckigen, langgestreckten Umriss auf. Zur Vermeidung einer unerwünschten Verschiebebewegung von in Längsrichtung aneinander liegenden Gütern auf dem Rollenteppich genügt es üblicherweise, die Rollen am vorderen sowie am hinteren Ende des Rollenteppichs feststellbar auszuführen.

Nach einer weiteren vorteilhaften Ausgestaltung wird eine Bewegung beim Verfahren des Rollenteppichs seitlich durch die Verschiebevorrichtung und/oder durch die den Ladeboden begrenzende Ladebordwände des LKWs geführt. Zur seitlichen Führung der Bewegung sind an den Längsseiten des Rollenteppichs zweckmäßigerweise Seitenführungsrollen, Gleitsteine oder dgl. angebracht. Die Seitenführungsrollen, Gleitsteine und dgl. können in Draufsicht seitlich über den Zwischenladeboden vorspringen. Das ermöglicht ein besonders komplikationsfreies Verfahren des Rollenteppichs durch die geöffnete Güter-Rückhaltevorrichtung sowie auf den Ladenboden.

Zum Abstellen der Güter auf dem Rollenteppich und zum Verfahren des Rollenteppichs kann vorteilhafterweise ein Gabelstapler verwendet werden.

Die vorgeschlagene Ladeeinrichtung ist relativ einfach aufgebaut. Sie ermöglicht ein vollständiges Beladen eines LKWs mit einem herkömmlichen Ladeboden innerhalb weniger Minuten. Damit können Transportkosten eingespart werden. Die Transporteffizienz kann verbessert werden.

Der Rollenteppich und die Güter-Rückhaltevorrichtung sind so aufeinander abgestimmt, dass der Rollenteppich mit darauf aufgenommenen Gütern durch die Güter-Rückhaltevorrichtung hindurch verfahrbar ist, wenn die Güter-Rückhaltemittel sich in der Öffnungsposition befinden. Sobald die auf dem Rollenteppich aufgenommenen Güter sich in vollständiger Überdeckung mit dem Ladeboden befinden, können die Güter-Rückhaltemittel von der Öffnungsposition in die Schließposition verstellt werden. Dabei überdecken die Güte-Rückhaltemittel den Rollenteppich abschnittsweise und blockieren beim Zurückziehen des Rollenteppichs eine Bewegung der Güter relativ zum Ladeboden. Beim Zurückziehen des Rollenteppichs werden die Güter also relativ zum Zwischenladeboden verschoben und auf den Ladeboden des LKWs abgesetzt bzw. sie werden vom Rollenteppich abgestreift.

Die Güter-Rückhaltemittel können unterschiedlich ausgestaltet sein. Sie können zumindest einen, vorzugsweise manuell, elektromechanisch, pneumatisch oder hydraulisch, von der Öffnungs- und die Schließposition bewegbaren, Arm umfassen. Der Arm kann verschwenkbar und/oder verschiebbar sein. Der Arm kann nach Art eines anheb- und absenkbaren Balkens ausgebildet sein, welcher vertikal verfahrbar ist. Es können auch zwei Arme vorgesehen sein, welche nach Art zweier Türflügel von der Öffnungs- und die Schließposition und umgekehrt bewegbar sein können. Zweckmäßigerweise ist der zumindest eine Arm so ausgestaltet, dass damit eine Verschiebebewegung ausschließlich von auf dem Rollenteppich aufgenommenen Paletten beim Zurückziehen des Rollenteppichs blockiert wird. D. h. der zumindest eine Arm ist in seiner Höhe so bemessen, dass er sich in der Schließposition lediglich bis zu einer Höhe von 5 bis 20 cm oberhalb des Zwischenladebodens erstreckt.

Erfindungsgemäß ist der Rollenteppich an seinen Längsseiten mit Seitenführungsrollen und/oder Gleitelementen versehen. Die vorgesehenen Seitenführungsrollen und/oder Gleitelemente ermöglichen eine rollend und/oder gleitend abgestützte Bewegung des Rollenteppichs gegenüber einer seitlich anliegenden Wand bzw. Seitenführungsschienen oder dgl. Die Gleitelemente oder Gleitsteine können insbesondere aus Kunststoff mit guten Gleiteigenschaften, beispielsweise Tetrafluorethylen, hergestellt sein.

Nach einer weiteren Ausgestaltung umfasst die Ladeeinrichtung eine Verschiebevorrichtung mit zwei einander gegenüberliegenden Wänden, von denen zumindest eine Wand zum Verschieben der auf dem Rollenteppich abgestellten Güter in eine Position in Überdeckung mit dem Zwischenladeboden gegen die andere Wand hin und her bewegbar ist. Die zumindest eine Wand kann elektromechanisch, pneumatisch oder hydraulisch hin und her bewegbar sein. Ein Abstand zwischen den beiden Wänden ist zweckmäßigerweise so ausgebildet, dass die Güter in eine Richtung quer zu einer Längserstreckungsrichtung des Rollenteppichs verschiebbar sind. Zweckmäßigerweise sind die einander gegenüberliegenden Wände beide hin und her bewegbar. Das ermöglicht ein schnelles und effektives Verschieben von nicht in Überdeckung mit dem Zwischenladeboden befindlichen Gütern.

Die vorgeschlagene Verschiebevorrichtung gewährleistet ein komplikationsfreies Verfahren des Rollenteppichs mit den darauf aufgenommenen Gütern auf den Ladeboden des LKWs. Ferner kann das Absetzen der Güter auf dem Rollenteppich zunächst ungenau erfolgen, so dass die Güter nicht unbedingt immer in vollständiger Überdeckung mit dem Zwischenladeboden sind. Ein exaktes Absetzen der Güter in Überdeckung mit dem Zwischenladeboden oder eine Korrektur der Position der abgesetzten Güter ist nicht erforderlich. Das beschleunigt den Vorgang des Vorkonfektionierens der Güter auf dem Rollenteppich.

Nach einer weiteren vorteilhaften Ausgestaltung wird ein Ladeweg zum Verfahren des Rollenteppichs in eine Laderichtung stromaufwärts der Güter-Rückhaltevorrichtung durch Seitenführungsschienen begrenzt. Die Güter-Rückhaltevorrichtung kann bezüglich der Laderichtung stromabwärts der Verschiebevorrichtung angeordnet sein. Unter dem Begriff "Laderichtung" wird eine Richtung verstanden, bei welcher der Rollenteppich in Richtung zum Ladeboden des LKWs hin bewegt wird. Mit den stromaufwärts bezüglich der Verschiebevorrichtung vorgesehenen Seitenführungsschienen wird der Rollenteppich exakt auf den vorgegebenen Ladeweg geführt. Die Seitenführungsschienen können insbesondere so ausgestaltet sein, dass sich ein Abstand dazwischen sich in die Laderichtung verjüngt. Der Abstand ist in diesem Fall in einem Bereich unmittelbar vor der Güter-Rückhaltevorrichtung so bemessen, dass er zu einer Breite des Rollenteppichs korrespondiert. Mit der sich in Laderichtung verjüngenden Ausgestaltung des Abstands der Seitenführungsschienen können seitliche Abweichungen des Rollenteppichs bezüglich des Ladewegs beim Verschieben des Rollenteppichs korrigiert werden.

Nach einer weiteren Ausgestaltung weist der Rollenteppich eine Feststellvorrichtung zum wahlweisen Feststellen zumindest eines Teils der Rollen des Rollenteppichs auf. Durch das Feststellen zumindest eines Teils der Rollen ist es möglich, ein unerwünschtes Bewegen von auf dem Rollenteppich aufgenommenen Gütern zu vermeiden.

Der Rollenteppich kann eine Anhängevorrichtung zum Verbinden mit einem Fahrzeug, vorzugsweise einem Gabelstapler, umfassen. Das ermöglicht insbesondere die Verwendung eines Gabelstaplers zum Verfahren und/oder Zurückziehen des Rollenteppichs. Obgleich zum Verfahren und/oder Zurückziehen des Rollenteppichs auch eine spezifisch an den Rollenteppich angepasste und damit fest verbundene Antriebsvorrichtung vorgesehen sein kann, ist die Verwendung eines in Logistikunternehmen ohnehin meist vorhandenen Gabelstaplers aus Kostengründen vorteilhaft. Ein wahlweise mit dem Rollenteppich verbindbarer Gabelstapler kann im Falle eines Defekts schnell und einfach ausgetauscht werden.

Erfindungsgemäß ist der Rollenteppich aus einer Vielzahl von miteinander verbundenen Rollenmodulen gebildet. Der modulartige Aufbau des Rollenteppichs hat herstellungstechnische Vorteile und erleichtert dessen Reparatur.

Jedes Rollenmodul ist zweckmäßigerweise aus zwei einander gegenüberliegenden Längsstreben gebildet, welche in Querrichtung mit einer Vielzahl daran drehbar angebrachter Walzen verbunden sind. Die Längsstreben können beispielsweise aus Flacheisen hergestellt sein. Die Walzen dienen zum rollenden Verschieben der Güter. An den Längsstreben können ferner Rollen zum Verfahren des Rollenmoduls auf einem Untergrund angebracht sein. Die Längsseiten des Rollenteppichs sind zweckmäßigerweise aus Seiten-Rollenmodulen gebildet. Bei den Seitenmodulen sind die Seitenführungsrollen, Gleitsteine oder dgl. an den freien Längsstreben angebracht.

Der vorgeschlagene Rollenteppich ist wegen seiner aus einer Vielzahl von Rollenmodulen gebildeten Bauweise in quer zu seiner Längserstreckungsrichtung und in vertikaler Richtung flexibel. Das ermöglicht insbesondere ein vereinfachtes Zentrieren des Rollenteppichs beim Verfahren in die Laderichtung durch die Seitenführungsschienen und/oder die Verschiebevorrichtung
und/oder durch Ladebordwände, welche den Ladenboden des LKWs seitlich begrenzen.

Nach einer weiteren vorteilhaften Ausgestaltung beträgt eine Höhe des Rollenteppichs zwischen 4 und 15 cm. Wegen der vorgeschlagenen geringen Höhe des Rollenteppichs ist es möglich, nahezu die gesamte Transporthöhe des LKWs oberhalb des Ladebodens zu nutzen.

Die vorgeschlagene Ladeeinrichtung ist einfach und kostengünstig ausgestaltet. Sie ermöglicht ein einfaches und schnelles Beladen eines LKWs. Damit kann die Transporteffizienz im Logistikbereich erheblich verbessert werden.

Nachfolgend wird ein Ausführungsbeispiel der Erfindung anhand der Zeichnungen näher erläutert. Es zeigen:
- Fig. 1: eine schematische Draufsicht auf eine Ladeeinrichtung,
- Fig. 2: eine Draufsicht auf einen Rollenteppich,
- Fig. 3: eine Seitenansicht gemäß Fig. 2 mit darauf aufgenommenen Paletten,
- Fig. 4: eine Draufsicht auf ein Güter-Rückhaltemittel,
- Fig. 5: eine schematische Teilschnittansicht gemäß Fig. 4 mit einem Rollenteppich mit einer darauf aufgenommenen Palette,
- Fig. 6: eine perspektivische Ansicht einer Verschiebevorrichtung,
- Fig. 7: eine erste Seitenansicht gemäß Fig. 6 und
- Fig. 8: eine zweite Seitenansicht gemäß Fig. 6.

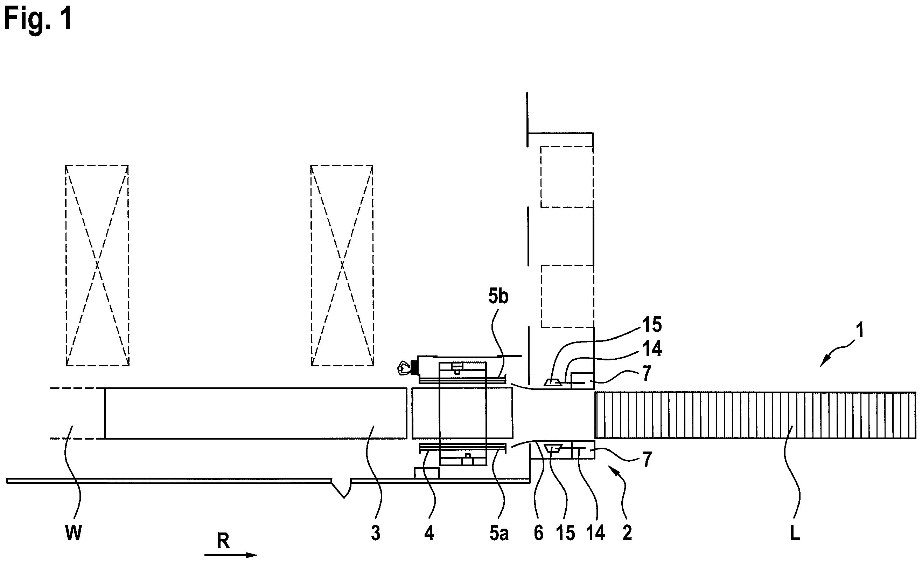

Fig. 1 zeigt eine schematische Draufsicht auf eine Ladeeinrichtung zum heckseitigen Beladen eines hier schematisch mit dem Bezugszeichen 1 bezeichneten LKWs. Der LKW 1 ist heckseitig an eine Laderampe 2 angedockt. Mit dem Bezugszeichen 3 ist schematisch ein Rollenteppich angedeutet. Stromabwärts des Rollenteppichs 3 bezüglich einer mit dem Pfeil R angedeuteten Laderichtung befindet sich eine Verschiebevorrichtung 4 mit zwei einander gegenüberliegenden Wänden 5a und 5b. Mit dem Bezugszeichen 6 sind stromabwärts der Verschiebevorrichtung 4 vorgesehene Seitenführungsschienen bezeichnet.

Der Rollenteppich 3 befindet sich auf einem allgemein mit dem Bezugszeichen W bezeichneten Ladeweg, welcher sich durch die Verschiebevorrichtung 4 und die Seitenführungsschienen 6 bis zu einer Güter-Rückhaltevorrichtung 7 erstreckt.

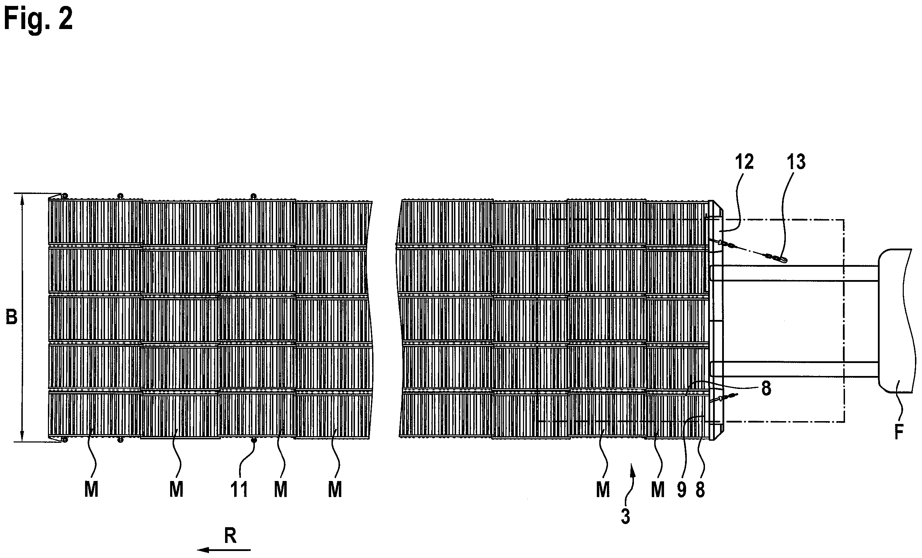

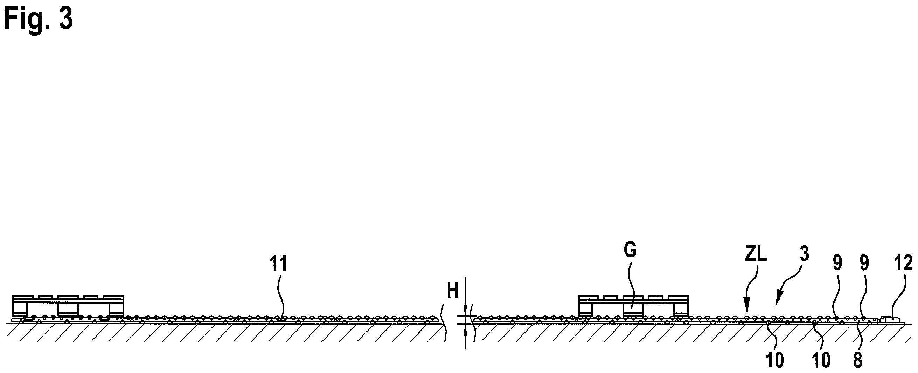

Die Fig. 2 und 3 zeigen im Detail den Rollenteppich 3. Der Rollenteppich 3 ist aus einer Vielzahl von miteinander verbundenen Rollenmodulen M gebildet. Jedes Rollenmodul M umfasst zwei einander gegenüberliegende Längsstreben 8, welche vorzugsweise aus einem Flacheisen hergestellt sind. Die Längsstreben 8 sind in Querrichtung mit einer Vielzahl daran drehbar angebrachter Walzen 9 verbunden. Wie insbesondere aus Fig. 3 ersichtlich ist, sind an den Längsstreben 8 Rollen 10 zum Verfahren des Rollenmoduls M auf einem Untergrund angebracht. An Seiten-Rollenmodulen, welche in Draufsicht die Längsseiten des im Wesentlichen rechteckig ausgebildeten Rollenteppichs 3 bilden, sind Seitenführungsrollen 11 angebracht. Mit dem Bezugszeichen 12 ist eine Quertraverse bezeichnet, welche an einem heckseitigen Ende des Rollenteppichs 3 angebracht ist. An der Quertraverse 12 ist eine Anhängevorrichtung 13 zum Verbinden mit einem Fahrzeug, vorzugsweise einem hier schematisch mit dem Bezugszeichen F angedeuteten Gabelstapler, angebracht. Die Anhängevorrichtung kann aus einer Deichsel, aus Ketten oder dgl. gebildet sein. In die Quertraverse 12 kann ein (hier nicht gezeigter) Druckspeicher einer pneumatischen Feststellvorrichtung zum wahlweisen Feststellen zumindest eines Teils der Walzen 9 des Rollenteppichs 3 untergebracht sein.

Der in Fig. 1 schematisch angedeutete LKW 1 weist einen Ladeboden L auf. Eine die Walzen 9 des Rollenteppichs 3 verbindende Ebene bildet einen Zwischenladeboden ZL. Auf dem Zwischenladeboden ZL ist in Fig. 3 ein mit dem Bezugszeichen G bezeichnetes Gut, hier eine Palette, abgestützt. Eine Höhe H des Rollenteppichs 3 beträgt zweckmäßigerweise zwischen 4 und 15 cm, und eine Breite B beträgt zweckmäßigerweise zwischen 240 und 260 cm, insbesondere zwischen 245 bis 255 cm.

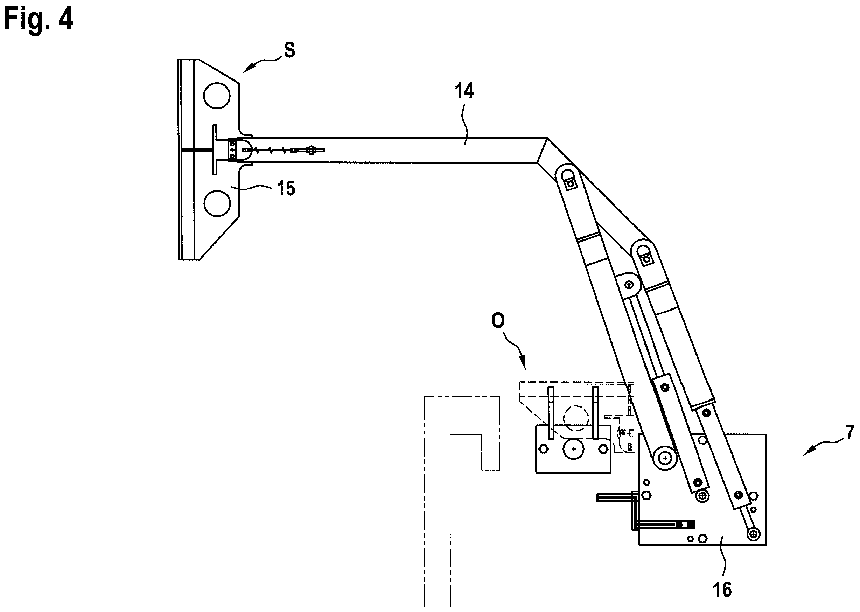

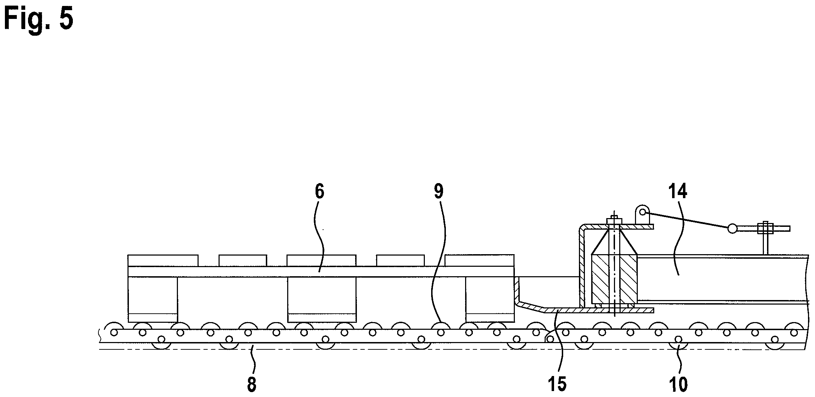

Die Fig. 1, 4 und 5 zeigen ein Ausführungsbeispiel einer Güter-Rückhaltevorrichtung 7. Die Güter-Rückhaltevorrichtung 7 weist hier zwei Güter-Rückhaltemittel 14 auf, welche in Form verschwenkbarer Arme ausgebildet sind. Jeder der Arme 14 weist an seinem freien Ende ein Rückhalteelement 15 auf. Der Arm 14 ist mittels einer Antriebseinrichtung 16 um einen Winkel von etwa 90° von der in Fig. 4 gezeigten Schließposition in eine ebenfalls in Fig. 4 angedeutete Öffnungsposition O - und umgekehrt - verschwenkbar. - In Fig. 1 sind die Arme 14 in der Öffnungsposition O gezeigt.

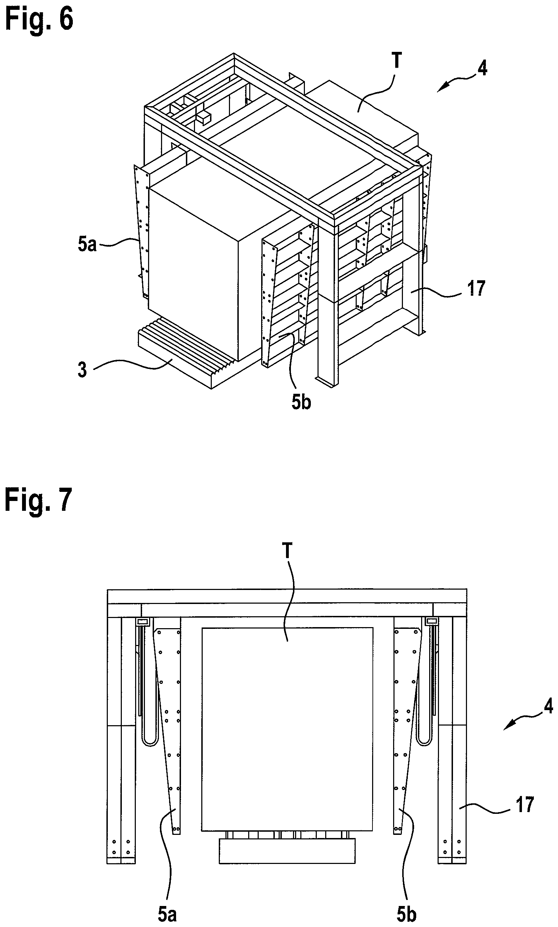

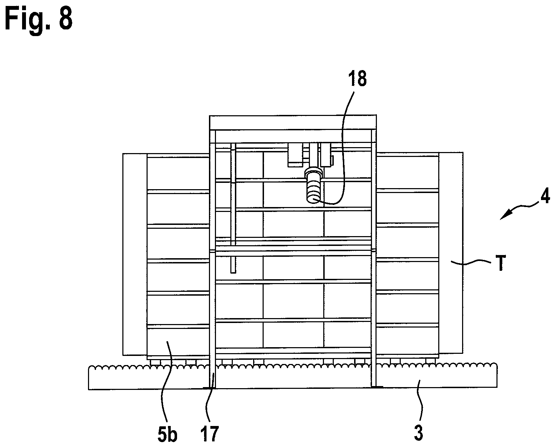

Die Fig. 6 bis 8 zeigen die Verschiebvorrichtung 4. Die Verschiebevorrichtung 4 umfasst hier eine Brücke 17, an welcher einander gegenüberliegende Wände 5a, 5b hängend angebracht sind. Die Wände 5a und 5b sind im Wesentlichen parallel angeordnet. Sie sind aufeinander zu und voneinander weg mittels elektromotorischer Antriebseinrichtungen 18 bewegbar. Mit dem Bezugseichen T ist schematisch ein Ladevolumen bezeichnet, welches in seiner Höhe und Breite etwa dem Transportvolumen des zu beladenden LKWs 1 entspricht. Die Wände 5a, 5b erstrecken sich etwa parallel zum Ladeweg W.

Die Funktion der Ladeeinrichtung ist wie folgt:
Zunächst dockt der LKW 1 heckseitig an der Laderampe 2 an. Auf dem Rollenteppich 3 befinden sich bereits vorkonfektioniert die Güter G, mit denen der LKW 1 beladen werden soll. Der Rollenteppich 3 wird dann abschnittsweise in die Verschiebevorrichtung 4 verfahren. Sodann werden die Wände 5a, 5b der Verschiebevorrichtung 4 in Richtung des Rollenteppichs 3 verfahren. Dabei werden eventuell über den Zwischenladeboden ZL seitlich hervorstehende Güter G in Überdeckung mit dem Zwischenladeboden ZL gebracht. Dieser Vorgang wird mehrfach wiederholt, bis sämtliche Güter G in Überdeckung mit dem Zwischenladeboden ZL sind. Dabei wird der Rollenteppich 3 sukzessive entlang des Ladewegs W bewegt. Er wird stromabwärts der Verschiebevorrichtung 4 mittels der Seitenführungsschienen 6 seitlich im Zusammenwirken mit den Seitenführungsrollen 11 so geführt, dass er exakt auf den Ladeboden L verschoben werden kann. Sobald sich der Rollenteppich 3 bzw. die darauf aufgenommenen Güter G in Überdeckung mit dem Ladeboden L befinden, werden die Arme 14 von der Öffnungs- in die Schließposition bewegt.

Sofern der Rollenteppich 3 mit einer Festsetzvorrichtung ausgestattet ist, werden nun die mittels der Festsetzvorrichtung festgesetzten Walzen 9 gelöst, so dass die auf dem Rollenteppich 3 aufgenommenen Güter G bewegbar sind.

Anschließend wird der Rollenteppich 3 entgegen der Laderichtung R vom Ladeboden L zurückgezogen. Dabei wird eine Bewegung der auf dem Rollenteppich 3 aufgenommenen Güter G mittels der Halteelemente 15 blockiert. Die Güter G werden auf den Ladeboden L abgestreift. Sobald der Rollenteppich 3 vollständig aus dem LKW 1 herausgezogen worden ist, wird die Güter-Rückhaltevorrichtung 7 geöffnet bzw. die Arme 14 werden in die Öffnungsposition O verfahren.

Anschließend können die heckseitigen Türen des LKWs 1 geschlossen werden. Der Ladevorgang ist beendet.

### Bezugszeichenliste

- 1: LKW
- 2: Laderampe
- 3: Rollenteppich
- 4: Verschiebevorrichtung
- 5a, 5b: Wand
- 6: Seitenführungsschiene
- 7: Güter-Rückhaltevorrichtung
- 8: Längsstrebe
- 9: Walze
- 10: Rolle
- 11: Seitenführungsrolle
- 12: Quertraverse
- 13: Anhängevorrichtung
- 14: Arm
- 15: Halteelement
- 16: Antriebseinrichtung
- 17: Brücke
- 18: elektromotorische Antriebseinrichtung

- B: Breite
- F: Gabelstapler
- G: Gut
- H: Höhe
- L: Ladeboden
- M: Rollenmodul
- O: Öffnungsposition
- R: Laderichtung
- S: Schließposition
- T: Ladevolumen
- W: Ladeweg
- ZL: Zwischenladeboden

## Patentansprüche

1. Ladeeinrichtung zum heckseitigen Beladen eines LKWs (1), umfassend
einen verfahrbaren Rollenteppich (3), welcher einen Zwischenladeboden (ZL) zum Abstellen von Gütern (G) bildet,
eine Güter-Rückhaltevorrichtung (7) mit Güter-Rückhaltemitteln (14, 15),
wobei die Güter-Rückhaltemittel (14) wahlweise von einer Öffnungsposition (O) in eine Schließposition (S) bewegbar sind,
wobei die Güter-Rückhaltemittel (14) so ausgebildet sind, dass (i) in der Öffnungsposition (O) der Rollenteppich (3) mit den darauf aufgenommenen Gütern (G) durch die Güter-Rückhaltevorrichtung (7) hindurch verfahrbar ist, und dass (ii) in der Schließposition (S) die Güter-Rückhaltemittel (14) den Rollenteppich (3) abschnittsweise so überdecken, dass die Güter (G) beim Zurückziehen des Rollenteppichs (3) aus der Güter-Rückhaltevorrichtung (7) relativ zum Zwischenladeboden (ZL) verschoben werden,
wobei der Rollenteppich (3) aus einer Vielzahl von miteinander verbundenen Rollenmodulen (M) gebildet ist,
wobei der Rollenteppich (3) wegen seiner aus einer Vielzahl von Rollenmodulen (M) gebildeten Bauweise in einer Richtung quer zu seiner Längserstreckungsrichtung und in vertikaler Richtung flexibel ist, und
wobei der Rollenteppich (3) an seinen Längsseiten mit Seitenführungsrollen (11) und/oder Gleitelementen versehen ist.

2. Ladeeinrichtung nach Anspruch 1, wobei die Güter-Rückhaltemittel (14) zumindest einen, vorzugsweise elektromechanisch, pneumatisch oder hydraulisch von der Öffnungs- (O) in die Schließposition (S) bewegbaren, Arm (14) umfasst.

3. Ladeeinrichtung nach Anspruch 2, wobei der Arm (14) verschwenkbar und/oder verschiebbar ist.

4. Ladeeinrichtung nach einem der vorhergehenden Ansprüche, umfassend eine Verschiebevorrichtung (4) mit zwei einander gegenüberliegenden Wänden (5a, 5b), von denen zumindest eine Wand (5a, 5b) zum Verschieben der auf dem Rollenteppich (3) abgestellten Güter (G) in eine Position in Überdeckung mit dem Zwischenladeboden (ZL) gegen die andere Wand (5a, 5b) hin und her bewegbar ist.

5. Ladeeinrichtung nach Anspruch 4, wobei die Wand (5a, 5b) elektromechanisch, pneumatisch oder hydraulisch hin und her bewegbar ist.

6. Ladeeinrichtung nach einem der Ansprüche 4 oder 5, wobei ein Abstand zwischen den Wänden (5a, 5b) so ausgebildet ist, dass die Güter (G) in einer Richtung quer zur Längserstreckungsrichtung des Rollenteppichs (3) verschiebbar sind.

7. Ladeeinrichtung nach einem der vorhergehenden Ansprüche, wobei ein Ladeweg (W) zum Verfahren des Rollenteppichs (3) in eine Laderichtung (R) stromaufwärts der Güter-Rückhaltevorrichtung (7) durch Seitenführungsschienen (6) begrenzt wird.

8. Ladeeinrichtung nach Anspruch 7, wobei die Güter-Rückhaltevorrichtung (7) bezüglich der Laderichtung (R) stromabwärts der Verschiebevorrichtung (4) angeordnet ist.

9. Ladeeinrichtung nach einem der vorhergehenden Ansprüche, wobei jedes Rollenmodul (M) aus zwei einander gegenüberliegenden Längsstreben (8) gebildet ist, welche in Querrichtung mit einer Vielzahl daran drehbar angebrachter Walzen (9) verbunden sind.

10. Ladeeinrichtung nach Anspruch 9, wobei an den Längsstreben (8) Rollen (10) zum Verfahren des Rollenmoduls (M) auf einem Untergrund angebracht sind.

11. Ladeeinrichtung nach einem der vorhergehenden Ansprüche, wobei der Rollenteppich (3) eine Feststellvorrichtung zum wahlweisen Feststellen zumindest eines Teils der Walzen (9) des Rollenteppichs (3) aufweist.

12. Ladeeinrichtung nach einem der vorhergehenden Ansprüche, wobei der Rollenteppich (3) eine Anhängevorrichtung (13) zum Verbinden mit einem Fahrzeug, vorzugsweise einem Gabelstapler (F), umfasst.

13. Ladeeinrichtung nach einem der vorhergehenden Ansprüche, wobei eine Höhe (H) des Rollenteppichs (3) zwischen 4 und 15 cm beträgt.

## Claims

1. Loading device for the rear loading of a lorry (1), comprising
a movable roller carpet (3) forming an intermediate loading floor (ZL) for depositing goods (G),
a goods retaining device (7) with goods retaining means (14, 15),
wherein the goods retaining means (14) are selectively movable from an open position (O) to a closed position (S),
wherein the goods retaining means (14) are designed in such a way that (i) in the opening position (O) the roller carpet (3) with the goods (G) received thereon can be moved through the goods retaining device (7), and in that (ii) in the closed position (S) the goods retaining means (14) cover the roller carpet (3) from section by section in such a way that the goods (G) are displaced relative to the intermediate loading floor (ZL) when the roller carpet (3) is retracted from the goods retaining device (7),
wherein the roller carpet (3) is formed from a plurality of interconnected roller modules (M),
wherein the roller carpet (3) is flexible in a direction transverse to its longitudinal extension direction and in a vertical direction due to its construction formed by a plurality of roller modules (M), and
wherein the roller carpet (3) is provided on its longitudinal sides with lateral guide rollers (11) and/or sliding elements.

2. Loading device according to claim 1, wherein the goods retaining means (14) comprises at least one arm (14), preferably electromechanically, pneumatically or hydraulically movable from the opening position (O) to the closing position (S).

3. Loading device according to claim 2, wherein the arm (14) is pivotable and/or displaceable.

4. Loading device according to one of the preceding claims, comprising a shifting device (4) with two walls (5a, 5b) facing each other, of which at least one wall (5a, 5b) is movable to and against the other wall (5a, 5b) for shifting the goods (G) placed on the roller carpet (3) into a position in overlap with the intermediate loading floor (ZL).

5. Loading device according to claim 4, wherein the wall (5a, 5b) can be reciprocated electromechanically, pneumatically or hydraulically.

6. Loading device according to one of claims 4 or 5, wherein a distance between the walls (5a, 5b) is formed such that the goods (G) are displaceable in a direction transverse to the longitudinal extension direction of the roller carpet (3).

7. Loading device according to any of the preceding claims, wherein a loading path (W) for moving the roller carpet (3) in a loading direction (R) upstream of the goods retaining device (7) is limited by lateral guide rails (6).

8. Loading device according to claim 7, wherein the goods retaining device (7) is arranged downstream of the displacement device (4) with respect to the loading direction (R).

9. A loading device according to any one of the preceding claims, wherein each roller module (M) is formed of two opposing longitudinal struts (8) connected transversely to a plurality of rollers (9) rotatably mounted thereon.

10. Loading device according to claim 9, wherein rollers (10) for moving the roller module (M) on a base are attached to the longitudinal struts (8).

11. Loading device according to any one of the preceding claims, wherein the roller carpet (3) comprises a locking device for selectively locking at least part of the rollers (9) of the roller carpet (3).

12. Loading device according to any one of the preceding claims, wherein the roller carpet (3) comprises a hitch (13) for connection to a vehicle, preferably a forklift truck (F).

13. Loading device according to any of the preceding claims, wherein a height (H) of the roller carpet (3) is between 4 and 15 cm.

## Revendications

1. Dispositif de chargement destiné au chargement à l'arrière d'un poids lourd (1), comprenant un tapis à rouleaux (3) mobile, lequel forme un plancher de chargement intermédiaire (ZL) pour déposer des marchandises (G),
un dispositif de retenue de marchandises (7) avec des moyens de retenue de marchandises (14, 15), en ce que les moyens de retenue de marchandises (14) sont déplaçables au choix d'une position d'ouverture (O) à une position de fermeture (S),
les moyens de retenue de marchandises (14) étant réalisés de telle sorte que (i), dans la position d'ouverture (O), le tapis à rouleaux (3) avec les marchandises (G) placées sur ce dernier peut être déplacé à travers le dispositif de retenue de marchandises (7), et que (ii), dans la position de fermeture (S), les moyens de retenue de marchandises (14) recouvrent partiellement le tapis à rouleaux (3), de telle sorte que les marchandises (G) lors du retrait du tapis à rouleaux (3) du dispositif de retenue de marchandises (7) sont déplacées par rapport au plancher de chargement intermédiaire (ZL),
en ce que le tapis à rouleaux (3) est formé d'une pluralité de modules de rouleaux (M) reliés entre eux,
en ce que le tapis à rouleaux (3) est flexible dans un sens transversal à son sens longitudinal et dans un sens vertical en raison de sa construction réalisée à partir d'une pluralité de modules de rouleaux (M), et
en ce que le tapis à rouleaux (3) comporte sur ses grands côtés des galets de guidage latéral (11) et/ou des éléments coulissants.

2. Dispositif de chargement selon la revendication 1, en ce que les moyens de retenue de marchandises (14) comportent au moins un bras (14), de préférence mobile électromécaniquement, pneumatiquement ou hydrauliquement de la position d'ouverture (O) à la position de fermeture (S).

3. Dispositif de chargement selon la revendication 2, en ce que le bras (14) peut être amené à pivoter et/ou est susceptible d'être déplacé.

4. Dispositif de chargement selon l'une des revendications précédentes, comportant un dispositif de déplacement (4) ayant deux parois (5a, 5b) opposées l'une à l'autre, dont au moins une paroi (5a, 5b) peut effectuer un déplacement en va-et-vient contre l'autre paroi (5a, 5b) pour déplacer les marchandises (G) déposées sur le tapis à rouleaux (3) dans une position en recouvrement avec le plancher de chargement intermédiaire (ZL).

5. Dispositif de chargement selon la revendication 4, en ce que la paroi (5a, 5b) peut se déplacer en va-et-vient électromécaniquement, pneumatiquement ou hydrauliquement.

6. Dispositif de chargement selon l'une des revendications 4 ou 5, en ce qu'un espace entre les parois (5a, 5b) est tel que les marchandises (G) peuvent être déplacées dans un sens transversal au sens longitudinal du tapis à rouleaux (3).

7. Dispositif de chargement selon l'une des revendications précédentes, en ce qu'un trajet de chargement (W) pour le déplacement du tapis à rouleaux (3) est limité dans un sens de chargement (R) en amont du dispositif de retenue de marchandises (7) par des rails de guidage latéral (6).

8. Dispositif de chargement selon la revendication 7, en ce que le dispositif de retenue de marchandises (7) par rapport au sens de chargement (R) est disposé en aval du dispositif de déplacement (4).

9. Dispositif de chargement selon l'une des revendications précédentes, en ce que chaque module de rouleaux (M) est réalisé à partir de deux montants longitudinaux (8) opposés l'un à l'autre, qui sont reliés dans le sens transversal à une pluralité de rouleaux (9) qui y sont montés à rotation.

10. Dispositif de chargement selon la revendication 9, en ce que des rouleaux (10) sont montés sur les montants longitudinaux (8) pour déplacer le module de rouleaux (M) sur un support.

11. Dispositif de chargement selon l'une des revendications précédentes, en ce que le tapis à rouleaux (3) comporte un dispositif de blocage pour bloquer sélectivement au moins une partie des rouleaux (9) du tapis à rouleaux (3).

12. Dispositif de chargement selon l'une des revendications précédentes, en ce que le tapis à rouleaux (3) comporte un dispositif d'attelage (13) permettant de le relier à un véhicule, de préférence à un chariot élévateur (F).

13. Dispositif de chargement selon l'une des revendications précédentes, en ce qu'une hauteur (H) du tapis à rouleaux (3) est comprise entre 4 et 15 cm.
